# EUROPÄISCHE PATENTSCHRIFT

(11) **EP 3 735 740 B1**
(45) Veröffentlichungstag und Bekanntmachung des Hinweises auf die Patenterteilung: **17.08.2022**
(21) Anmeldenummer: 19700044.1
(22) Anmeldetag: 03.01.2019
(51) Int. Cl.: H02M 5/458, H02M 3/335, H02M 3/155, H02M 1/00, H02J 3/38, F03D 7/02, H02P 9/02

(54) **WINDENERGIEANLAGE ZUM EINSPEISEN ELEKTRISCHER LEISTUNG MITTELS VOLLUMRICHTER**
WIND POWER PLANT FOR FEEDING ELECTRICAL POWER BY MEANS OF FULL CONVERTERS
INSTALLATION D'ÉNERGIE ÉOLIENNE POUR INJECTER D'ÉNERGIE ÉLECTRIQUE AU MOYEN D'UN CONVERTISSEUR

(30) Priorität: 03.01.2018 DE 102018100084
(43) Veröffentlichungstag der Anmeldung: 11.11.2020
(73) Patentinhaber: Wobben Properties GmbH, 26607 Aurich (DE)
(72) Erfinder: BEEKMANN, Alfred, 26639 Wiesmoor (DE); MACKENSEN, Ingo, 26607 Aurich (DE); BUSKER, Kai, 26629 Großefehn (DE)
(74) Vertreter: Eisenführ Speiser
(86) Internationale Anmeldenummer: PCT/EP2019/050078
(87) Internationale Veröffentlichungsnummer: WO 2019/134928

(56) Entgegenhaltungen:
- EP-A2- 2 429 073
- DE-A1- 19 845 903
- DE-A1-102014 219 052
- ES-A1- 2 190 735
- SEUNG-HO SONG ET AL: "Implementation and control of grid connected AC-DC-AC power converter for variable speed wind energy conversion system", APEC 2003. 18TH. ANNUAL IEEE APPLIED POWER ELECTRONICS CONFERENCE AND EXPOSITION. MIAMI BEACH, FL, FEB. 9 - 13, 2003; [ANNUAL APPLIED POWER ELECTRONICS CONFERENCE], NEW YORK, NY : IEEE, US, Bd. 1, 9. Februar 2003 (2003-02-09), Seiten 154-158, XP010631504, DOI: 10.1109/APEC.2003.1179207 ISBN: 978-0-7803-7768-4
- Margaris I. D. ET AL: "Direct Drive Synchronous Generator Wind Turbine Models for Power System Studies", 7th Mediterranean Conference and Exhibition on Power Generation, Transmission, Distribution and Energy Conversion, 7 November 2010 (2010-11-07), pages 1-7, XP055884685, Agia Napa, Cyprus DOI: 10.1049/cp.2010.0848 ISBN: 978-1-84919-319-1 Retrieved from the Internet: URL:https://digital-library.theiet.org/doc server/fulltext/conference/cp572/20100848. pdf?expires=1643312825&id=id&accname=ietid 004534&checksum=D7727AB5E423C689B045FBACB1 D8FE09 [retrieved on 2022-01-27]
- RUBI GARCIA HERNANDEZ ET AL: "Modeling and Control of a Wind Turbine Synchronous Generator", ELECTRONICS, ROBOTICS AND AUTOMOTIVE MECHANICS CONFERENCE (CERMA), 2011 IEEE, IEEE, 15 November 2011 (2011-11-15), pages 222-227, XP032090934, DOI: 10.1109/CERMA.2011.42 ISBN: 978-1-4577-1879-3

## Beschreibung

Die vorliegende Erfindung betrifft ein Verfahren zum Einspeisen eklektischer Leistung in ein elektrisches Versorgungsnetz, insbesondere mittels einer Windenergieanlage. Die Erfindung betrifft auch eine entsprechende Windenergieanlage.

Zum Einspeisen elektrischer Leistung in ein elektrisches Versorgungsnetz verwenden moderne Windenergieanlagen üblicherweise ein sogenanntes Vollumrichterkonzept. Hierbei wird von einem Generator elektrische Wechselspannung erzeugt und in eine erste Gleichspannung gleichgerichtet. Mittels eines Hochsetzstellers kann diese erste Gleichspannung in eine zweite Gleichspannung hochgesetzt werden. Alternativ kann auch die Wechselspannung unmittelbar durch einen aktiven Gleichrichter in die gewünschte zweite Gleichspannung gleichgerichtet werden, die erste Gleichspannung entfällt dann. Die zweite Gleichspannung bildet in beiden Fällen einen Eingang für einen Wechselrichter, der die in das elektrische Versorgungsnetz einzuspeisende elektrische Leistung mit einer an das elektrische Versorgungsnetz angepassten Wechselspannung erzeugt.

Die zweite Gleichspannung ist somit entsprechend so hoch, dass eine Wechselspannung mit einer solchen Höhe erzeugt werden kann, dass die erzeugte Leistung in das elektrische Versorgungsnetz eingespeist werden kann. Mit anderen Worten, muss diese zweite Gleichspannung so hoch sein, dass auch die Höhe der benötigten Wechselspannung zum Einspeisen erreicht werden kann. Diese Höhe der einzuspeisenden Wechselspannung entspricht somit der Höhe der Wechselspannung im elektrischen Versorgungsnetz, gegebenenfalls unter Berücksichtigung eines Übersetzungsverhältnisses eines Transformators, wenn diese Wechselspannung über einen solchen Transformator in das elektrische Versorgungsnetz eingespeist wird.

Der Hochsetzsteller bzw. aktive Gleichrichter steuert dabei besonders den Generator an, indem er die erste Wechselspannung, der von dem Generator erzeugten elektrischen Leistung steuert. Dies kann indirekt durch Einstellen der Höhe der ersten Gleichspannung erfolgen, oder direkt durch den aktiven Gleichrichter.

Besonders sollen der Hochsetzsteller oder der aktive Gleichrichter bei geringer Generatorleistung, also insbesondere bei vergleichsweise schwachem Wind, dafür sorgen, dass die zweite Gleichspannung auch erreicht wird. Der Hochsetzsteller bzw. der aktive Gleichrichter steuern zwar im Wesentlichen den Generator, nämlich besonders die Abgabe eines Statorstroms des Generators, müssen dennoch gewährleisten, dass die zweite Gleichspannung erreicht wird. Bei starkem Wind liefert der Generator regelmäßig so viel Leistung, dass die zweite Gleichspannung ohne Weiteres erreicht werden kann. Besonders kommt hier in Betracht, dass der Hochsetzsteller bei starkem Wind und entsprechend großer Generatorleistung gar nicht benötigt wird. Besonders im Volllastbetrieb, wenn also die Windgeschwindigkeit Nennwindgeschwindigkeit erreicht hat, oder darüber liegt, arbeitet die Steuerung der Windenergieanlage im Wesentlichen so, dass sie eine Generatorleistung begrenzen muss. Eine optimale Ansteuerung des Generators derart, dass ein besonders hoher Statorstrom fließen kann, ist dann nicht mehr notwendig.

Der Hochsetzsteller bzw. aktive Gleichrichter steuert somit im Wesentlichen den Generator.

Heutzutage ist es aber auch wichtig, neben dem Einspeisen der erzeugten Wirkleistung auch beim Einspeisen Stützaufgaben für das elektrische Versorgungsnetz wahrzunehmen. Für solche Stützaufgaben kann besonders die Einspeisung von Wirk- und Blindleistung zur Stützung entsprechend verändert werden. Insbesondere kommt eine von der Netzspannung abhängige Blindleistungseinspeisung in Betracht, die besonders einem Abfall der Spannung des elektrischen Versorgungsnetzes durch eine Blindleistungseinspeisung entgegen wirken kann. Außerdem kommt besonders auch eine von der Netzfrequenz des elektrischen Versorgungsnetzes abhängige Wirkleistungseinspeisung in Betracht, bei der insbesondere einer zu hohen Frequenz durch Reduzierung der Wirkleistungseinspeisung entgegen gewirkt werden kann.

Besonders bei schwachem Wind werden aber auch die Möglichkeiten der Windenergieanlage, Wirk- und Blindleistung zum Zwecke der Netzstützung einzuspeisen, entsprechend begrenzt. Dabei kann es aber besonders bei wenig Wind hilfreich sein, wenn Windenergieanlagen zur Netzstützung beitragen können, denn bei wenig Wind sind Windenergieanlagen, die grundsätzlich gute und schnelle Regelungseigenschaften aufweisen, weniger dominant und können dadurch zu einem hinsichtlich Stabilität geschwächten Netz führen.

Das Deutsche Patent- und Markenamt hat in der Prioritätsanmeldung zu vorliegender Anmeldung folgenden Stand der Technik recherchiert: DE 10 2013 208 410 A1, DE 10 2014 219 052 A1 und CN 202 444 429 U.

EP 2 429 073 A2 betrifft ein Verfahren zum Einspeisen elektrischer Leistung in ein elektrisches Versorgungsnetz mittels einer Windenergieanlage.

DE 10 2014 219 052 A1 betrifft ein Verfahren zum Erzeugen eines elektrischen Wechselstroms mittels eines Toleranzbandverfahrens.

Artikel von Seung-Ho Song et al.: "Implementation and Control of Grid Connected AC-DC-AC Power Converter for Variable Speed Wind Energy Conversion System", APEC 2003. 18th ANNUAL IEEE Applied Power Electronics Conference and Exposition, Miami Beach, 9. - 13. Februar 2003; [Annual Applied Power Electronics Conference], New York, NY, US, Bd. 1, Seiten 154-158, betrifft ein Verfahren zum Einspeisen elektrischer Leistung in ein elektrisches Versorgungsnetz mittels einer Windenergieanlage.

ES 2 190 735 A1 betrifft ein Verfahren zum Einspeisen einer elektrischen Leistung in ein elektrisches Versorgungsnetz mittels einer Windenergieanlage.

DE 198 45 903 A1 betrifft ein Verfahren zum Einspeisen elektrischer Leistung in ein elektrisches Versorgungsnetz mittels einer Windenergieanlage. Margaris I. D. ET AL: "Direct Drive Synchronous Generator Wind Turbine Models for Power System Studies",7th Mediterranean Conference and Exhibition on Power Generation, Transmission, Distribution and Energy Conversion, 7. November 2010 (2010-11-07), Seiten 1-7, XP055884685,Agia Napa, Cyprus DOI: 10.1049/cp.2010.0848 ISBN: 978-1-84919-319-1 betrifft ein Verfahren zum Einspeisen elektrischer Leistung in ein Versorgungsnetz mittels einer Windenergieanlage.

RUBI GARCIA HERNANDEZ ET AL: "Modeling and Control of a Wind Turbine Synchronous Generator",ELECTRONICS, ROBOTICS AND AUTOMOTIVE MECHANICS CONFERENCE (CERMA), 2011 IEEE, IEEE, 15. November 2011 (2011-11-15), Seiten 222-227, XP032090934,DOI: 10.1109/CERMA.2011.42 ISBN: 978-1-4577-1879-3 betrifft ein Verfahren zum Einspeisen elektrischer Leistung in ein Versorgungsnetz mittels einer Windenergieanlage.

Der vorliegenden Erfindung liegt somit die Aufgabe zugrunde, zumindest eines der genannten Probleme zu adressieren. Insbesondere soll eine Lösung vorgeschlagen werden, die über einen möglichst großen Bereich eine möglichst gute Netzstützung schaffen kann. Zumindest soll zu bisher bekannten Lösungen eine alternative Lösung vorgeschlagen werden.

Erfindungsgemäß wird ein Verfahren nach Anspruch 1 vorgeschlagen. Demnach wird eine erste Wechselspannung einer von einem Generator erzeugten elektrischen Leistung mit einer ersten elektrischen Gleichspannung gelichgereichtet. Diese Gleichspannung wird dann in eine zweite Gleichspannung hochgesetzt. Dafür kann ein Hochsetzsteller verwendet werden. Insbesondere erfolgt das Hochsetzen so, dass die zweite Gleichspannung zu der ersten Gleichspannung ein Hochsetzverhältnis aufweist. Dieses Hochsetzverhältnis kann somit das Verhältnis dieser beiden Gleichspannung zueinander kennzeichnen. Alternativ kann auch die erste Wechselspannung direkt in die zweite Gleichspannung gleichgerichtet werden, ohne dass die erste Gleichspannung als Zwischengröße erzeugt wird. Ein solches unmittelbares Gleichrichten auf die zweite Gleichspannung wird insbesondere mit einem aktiven Gleichrichter durchgeführt, der nicht nur eine Wechselspannung und eine Gleichspannung gleichrichten kann, sondern dabei auch gezielt Ströme steuern kann.

Im Ergebnis können beide Varianten, also Gleichrichten und Hochsetzen einerseits und direkt Gleichrichten ohne Hochsetzen andererseits, die erste Wechselspannung des Generators in die zweite Gleichspannung bringen. Die erste Wechselspannung ist vorzugsweise eine Ausgangsspannung an Statorklemmen, also am Ausgang eines Stators, eines Synchrongenerators.

Diese zweite Gleichspannung bildet dann die Eingangsspannung oder Basis für einen Wechselrichter, der diese zweite Gleichspannung in eine zweite Wechselspannung wechselrichtet, um dann die elektrische Leistung, die im Wesentlichen von dem Generator erzeugt wurde, in das elektrische Versorgungsnetz einzuspeisen. Die Einspeisung der elektrischen Leistung erfolgt hierbei in Abhängigkeit eines Einspeisesollwertes. Es wird also nicht ungesteuert gerade so viel Leistung eingespeist, wie vorhanden ist, sondern es wird dafür ein Sollwert vorgegeben, um dadurch auch eine Netzstützung erreichen zu können. Soweit aber eine Netzstützung nicht erforderlich ist bzw. nichts anderes fordert, kann als Einspeisesollwert auch die jeweils verfügbare und aus dem Wind entnehmbare Leistung als Wirkleistungssollwert vorgegeben werden.

Vorzugsweise gibt der Einspeisesollwert aber einen Wert für einen Wirkleistungsanteil und einen Blindleistungsanteil vor. Das kann auch bedeuten, dass der Einspeisesollwert, besonders bei Annahme einer Netzspannung, einen einzuspeisenden Strom nach Betrag und Phase vorgibt. Die Phase bezeichnet hierbei einen Phasenwinkel des einzuspeisenden Stroms in Bezug auf den Phasenwinkel der Spannung im elektrischen Versorgungsnetz.

Es wird nun vorgeschlagen, dass die zweite Gleichspannung in Abhängigkeit des Einspeisesollwertes eingestellt wird. Es wird also die zweite Gleichspannung nicht einfach auf einem fest vorgegebenen Wert belassen, sondern sie wird bedarfsabhängig variiert. Dies hängt von dem Einspeisesollwert ab. Dazu wird vorgeschlagen, dass die zweite Gleichspannung in Abhängigkeit einer Erhöhung des Einspeisesollwertes erhöht wird. Es wird also vorgeschlagen, die zweite Gleichspannung zu erhöhen, wenn der Einspeisesollwert sich erhöht. Für den Fall, dass der Einspeisesollwert einen Wirk- und einen Blindleistungsanteil enthält, kann als Bezugsgröße der Wert der Scheinleistung verwendet werden. Erhöht sich also die Scheinleistung dieses Einspeisesollwertes, wird vorgeschlagen, auch die zweite Gleichspannung zu erhöhen. Entsprechend kann auch die zweite Gleichspannung erhöht werden, wenn sich ein Sollwert für den einzuspeisenden Strom, nämlich bezogen auf den Betrag des einzuspeisenden Stroms, erhöht. Das entspricht bei gleicher Einspeisespannung, also bei gleicher zweiter Wechselspannung einer Betrachtung der Scheinleistung, jedenfalls dem Grunde nach.

Es kommt aber auch in Betracht, statt des Einspeisesollwertes den Einspeiseistwert zu verwenden. Durch Verwendung des Einspeisesollwertes kann besonders gut vorausschauend gesteuert werden. Durch die Verwendung des Einspeiseistwertes ist der relevante Wert gut bekannt, denn der Einspeisesollwert könnte von dem tatsächlich eingespeisten Einspeiseistwert abweichen. Dafür kann bei Betrachtung des Einspeiseistwertes die Spannungsanpassung erst etwas später reagieren. Soweit nicht anders beschrieben sind nachfolgende Erläuterungen und Effekte der Betrachtung des Einspeisesollwertes auch auf eine Betrachtung des Einspeiseistwertes anwendbar. Es kommt bevorzugt auch eine Kombination in Betracht, besonders so, dass der Einspeisesollwert und der Einspeiseistwert über eine Gewichtung einfließen. Vorzugsweise wird eine dynamische Gewichtung gewählt, derart, dass zunächst Änderungen des Einspeisesollwertes einfließen, nämlich über eine Gewichtung mit schnellerer Dynamik, wohingegen später Änderungen des Einspeiseistwertes einfließen, nämlich über eine Gewichtung mit langsamerer Dynamik.

Vorzugsweise wird zum Einstellen der zweiten Gleichspannung das Hochsetzverhältnis der zweiten zur ersten Gleichspannung in Abhängigkeit des Einspeisesollwertes eingestellt, wobei insbesondere das Hochsetzverhältnis größer als 1 und kleiner als 6 ist, vorzugsweise kleiner als 4 ist, insbesondere kleiner als 2 ist und/oder das Hochsetzverhältnis zusätzlich in Abhängigkeit der ersten Gleichspannung eingestellt wird. Durch das Hochsetzverhältnis kann dadurch gezielt auf die zweite Gleichspannung Einfluss genommen werden. Alternativ erfolgt die Einstellung der zweiten Gleichspannung in Abhängigkeit des Einspeisesollwertes direkt, insbesondere mittels eines aktiven Gleichrichters.

Gemäß einer Ausführungsform wird vorgeschlagen, dass der Einspeisesollwert ein Blindleistungssollwert ist. Somit wird hierfür vorgeschlagen, dass die zweite Gleichspannung erhöht wird, wenn sich der Blindleistungssollwert erhöht. Hier wurde besonders erkannt, dass eine Blindleistungseinspeisung bei höherer zweiter Gleichspannung verbessert werden kann. Es wurde erkannt, dass auch unabhängig einzuspeisender Wirkleistung eine solche Verbesserung der Blindleistungseinspeisung erzielt werden kann. Hier liegt besonders auch die Erkenntnis zugrunde, dass eine Erhöhung des Blindleistungssollwertes, die natürlich auch einhergehen sollte mit einer Erhöhung der tatsächlich eingespeisten Blindleistung, besonders zu einem Spannungsabfall an einer Netzdrossel führt. Vereinfacht ausgedrückt führt das zu einer Verringerung des Spannungsgefälles von der erzeugten zweiten Wechselspannung zur Netzspannung, also zu der Spannung im elektrischen Versorgungsnetz. Rein vorsorglich wird darauf hingewiesen, dass natürlich auch ein Transformator zwischengeschaltet sein kann, der an den grundsätzlichen Ausführungen aber nichts ändert, weil er im Ergebnis mit seinem Übersetzungsverhältnis berücksichtigt werden kann bzw. die Spannung entsprechend des Übersetzungsverhältnisses zu betrachten ist.

Jedenfalls führt eine solche Verringerung des Spannungsgefälles dazu, dass der Wechselrichter, der das Wechselspannungssignal durch ein entsprechendes Pulssignal erzeugt, zunächst durch eine entsprechende Änderung des Pulsmusters auf ein solches verringertes Spannungsgefälle reagieren müsste. Vereinfacht ausgedrückt müssten die Pulse breiter und die Pausen kürzer ausfallen.

Um das zu verhindern, zumindest abzuschwächen, wird vorgeschlagen, die zweite Gleichspannung zu erhöhen. Dann kann auch ein entsprechend hoher gewünschter Blindstrom mit einem nicht oder weniger modifizierten Pulssignal erzeugt werden.

Außerdem oder alternativ wird vorgeschlagen, dass das Einstellen der zweiten Gleichspannung in Abhängigkeit des Blindstromanteils der eingespeisten elektrischen Leistung erfolgt. Somit wird auch hier zusätzlich vorgeschlagen, nicht nur den Sollwert zu betrachten, sondern auch oder nur den Blindstromanteil zu betrachten, der tatsächlich eingespeist wurde. Dieser sollte zwar im Wesentlichen seinem Sollwert entsprechen, aber hier kann gegebenenfalls zusätzlich eine Erleichterung der Blindstromeinspeisung erreicht werden, wenn einfach bei einem hohen Blindstromanteil die zweite Gleichspannung erhöht wird, gegebenenfalls zusätzlich zu der Erhöhung in Abhängigkeit des Sollwertes noch weiter erhöht wird.

Besonders wurde erkannt, dass durch die gezielte Einstellung der zweiten Gleichspannung der Wechselrichter besonders effizient betrieben werden kann. Dabei wurde auch erkannt, dass ein solcher effizienter Betrieb nicht durch eine besonders hohe Gleichspannung oder durch eine besonders niedrige Gleichspannung erreicht wird, sondern dass dies durch gezielte Anpassung an die Leistungseinspeisung erfolgen kann. Besonders wurde auch erkannt, dass dies gerade auch für die Blindleistungseinspeisung zutreffend ist.

Gemäß einer Ausführungsform wird vorgeschlagen, dass zum Wechselrichten der zweiten Gleichspannung in die zweite Wechselspannung ein Toleranzbandverfahren verwendet wird. Bei einem Toleranzbandverfahren wird ein Toleranzband für den jeweils einzuspeisenden Strom vorgegeben. Der jeweilige Augenblickswert des eingespeisten Stroms wird dann erfasst und mit den beiden Toleranzbandgrenzen, die das Toleranzband definieren, verglichen. Stößt hierbei der erfasste Augenblickswert des Stromes an die obere Toleranzbandgrenze, wird in dem Wechselrichter, der dieses Wechselrichten ausführt, ein Schaltvorgang ausgelöst, der grundsätzlich zum Absenken des Ausgangsstromes, also des eingespeisten Stroms, führt. Erreicht der erfasste und zurückgeführte Augenblickswert des eingespeisten Stromes die untere Toleranzbandgrenze, wird entsprechend ein Schalten ausgelöst, das zu einer Erhöhung des eingespeisten Stromes führt.

Liegt nun eine hohe zweite Gleichspannung vor, also eine hohe Zwischenkreisspannung, führt jedes Schalten zu einem besonders starken Stromanstieg bzw. Stromabfall. Dadurch erreicht der jeweils zurückgeführte Augenblickswert des eingespeisten Stroms schneller die obere bzw. untere Toleranzbandgrenze. Das hat zur Folge, dass sich die Schaltfrequenz erhöht und das wiederum kann zur Folge haben, dass sich Schaltverluste erhöhen. Vor dieser Erkenntnis wird somit vorgeschlagen, in Abhängigkeit des Einspeisesollwertes die zweite Gleichspannung, insbesondere die genannte Zwischenkreisspannung einzustellen. Das bedeutet besonders, dass bei einem hohen Einspeisesollwert eine entsprechend hohe zweite Gleichspannung verwendet werden kann, wohingegen bei einem geringeren Einspeisesollwert auch eine geringere zweite Gleichspannung verwendet werden soll. Besonders ist natürlich auch das Toleranzband an den Einspeisesollwert angepasst, so dass bei einem großen Einspeisesollwert dennoch eine große zweite Gleichspannung verwendet werden kann, ohne dass eine zu hohe Schaltfrequenz auftritt. Hier kommt hinzu, dass bei einem hohen Einspeisesollwert an der Netzdrossel mehr Spannung abfallen kann, was das Spannungsgefälle verringert, wie oben schon erläutert wurde.

Andererseits soll aber die zweite Gleichspannung auch nicht zu niedrig gewählt werden, damit noch ein ausreichendes Spannungsgefälle bleibt. Anderenfalls kann besonders bei Verwendung des Toleranzbandverfahrens die Schaltfrequenz auch zu niedrig werden, was wiederum zu einer zu starken Verzerrung des zu erzeugenden sinusförmigen Signals führen kann. Schließlich ist das durch den Wechselrichter erzeugte sinusförmige Signal eine Näherung an ein sinusförmiges Signal, wobei dieses annähernd sinusförmige Signal durch entsprechende Schaltpulse erzeugt wird.

Besonders bei der Einspeisung von Blindleistung, was besonders auch für die Verwendung des Toleranzbandverfahrens gilt, aber nicht nur dafür, wurde erkannt, dass für dieses Einspeisen der Blindleistung auch ein möglichst sinusförmiges Signal notwendig ist. Hierbei kann es besonders an den Kuppen des sinusförmigen Signals, also in der Nähe des Maximalwertes bzw. Minimalwertes der angestrebten sinusförmigen Funktion, zu Problemen, nämlich Abflachungen kommen. Solche Abflachungen können besonders bei einer zu niedrigen zweiten Gleichspannung, also einer zu niedrigen Zwischenkreisspannung entstehen, wenn durch ein zu geringes Spannungsgefälle der Strom nur mit Mühe den entsprechenden Scheitelwert erreicht. Besonders beim Toleranzbandverfahren bedeutet das, dass in der Nähe dieser Kuppe bzw. dieses Scheitelwertes der Strom nur schwer die obere Toleranzbandgrenze, bzw. im negativen Fall die untere Toleranzbandgrenze erreicht. In dem Bereich wird dann im Extremfall bei zu niedriger zweiter Gleichspannung überhaupt nicht mehr geschaltet, wodurch sich eine Abflachung der Stromkuppe dort ergeben kann.

Gleichwohl soll aber auch keine zu große zweite Gleichspannung gewählt werden, um die genannten Schaltverluste nicht zu groß werden zu lassen.

Gemäß einer Ausführungsform wird vorgeschlagen, dass die zweite Gleichspannung in Abhängigkeit einer aus dem elektrischen Versorgungsnetz aufgenommenen Leistung, insbesondere Blindleistung, eingestellt wird. Hier wurde besonders erkannt, dass nicht nur die positive Einspeisung das Netz stützen kann, sondern auch eine Leistungsentnahme. Besonders kann einer zu hohen Netzspannung am verwendeten Netzanschlusspunkt durch Entnahme von Blindleistung entgegengewirkt werden, was auch als Absorption bezeichnet wird. Auch eine solche Leistungsentnahme, besonders Blindleistungsentnahme, benötigt das Ansteuern des ansonsten zum Einspeisen verwendeten Wechselrichters. Es wurde erkannt, dass auch hier das Einstellen der zweiten Gleichspannung in Abhängigkeit dieser Entnahme sinnvoll ist. Im Falle einer Wirkleistungsentnahme, könnte hierfür beispielsweise Leistung aus dem Gleichspannungszwischenkreis durch eine sogenannte Chopper-Schaltung verbraucht werden. Vorzugsweise wird aber vorgeschlagen, dass dies in Abhängigkeit aufgenommener Blindleistung erfolgt. Dazu kann die Windenergieanlage Wirkleistung einspeisen und gleichzeitig Blindleistung aufnehmen.

Besonders dieses gleichzeitige Einspeisen von Wirkleistung und Aufnehmen von Blindleistung wird auch gemäß einer Ausführungsform vorgeschlagen. Das Aufnehmen von Blindleistung, besonders, wenn gleichzeitig Wirkleistung eingespeist wird, bedarf grundsätzlich keiner Chopper-Schaltung oder anderen Maßnahme zum Leistungsverbrauch. Die Einstellung der zweiten Gleichspannung ist aber vorteilhaft, um hierbei die Blindleistungsentnahme möglichst effizient und auch mit möglichst gutem sinusförmigem Signal zu erreichen. Hierbei wird vorgeschlagen, dass die zweite Gleichspannung mit Erhöhung der eingespeisten Leistung erhöht wird. Optional wird dazu ergänzend vorgeschlagen, dass die zweite Gleichspannung aber verringert wird, wenn sich die aufgenommene Leistung, besonders die aufgenommene Blindleistung, erhöht, denn das bedeutet, dass die eingespeiste Leistung negativ ist und sich verringert.

Gemäß einer Ausführungsform wird vorgeschlagen, dass der Generator in Abhängigkeit eines vorherrschenden Windes und/oder in Abhängigkeit einer Vorgabe einen Arbeitspunkt aufweist und dass das Einstellen der zweiten Gleichspannung zusätzlich in Abhängigkeit des Arbeitspunktes erfolgt. Das Einstellen der zweiten Gleichspannung berücksichtigt also nicht nur die netzseitige Einspeisung, sondern auch generatorseitige Belange, nämlich den Arbeitspunkt des Generators. Damit kann in vorteilhafter Weise die Erzeugung der Leistung durch den Generator auf die Einspeisung abgestimmt werden und dabei möglichst effizient ein möglichst sinusförmiges Einspeisesignal erzeugt werden.

Vorzugsweise wird somit auch vorgeschlagen, dass die zweite Gleichspannung in Abhängigkeit einer Netzdrossel eingestellt wird, über die die elektrische Leistung in das elektrische Versorgungsnetz eingespeist wird. Die Netzdrossel bestimmt durch ihre Dimensionierung den Spannungsabfall, der durch einen Strom hervorgerufen wird, der durch sie fließt. Somit wurde erkannt, dass eine umso stärkere Anpassung der zweiten Gleichspannung vorzusehen ist, umso größer die Netzdrossel ist, um es einfach auszudrücken.

Somit wird besonders vorgeschlagen, dass die zweite Gleichspannung eingestellt wird in Abhängigkeit des Drosselwertes und der Netzspannung und der eingespeisten oder einzuspeisenden Blindleistung.

Gemäß einer Ausführungsform wird vorgeschlagen, dass zum Hochsetzen der ersten Gleichspannung und der zweiten Gleichspannung ein Hochsetzsteller verwendet wird bzw. zum Gleichrichten der ersten Wechselspannung in die zweite Gleichspannung ohne Erzeugen der ersten Gleichspannung ein aktiver Gleichrichter verwendet wird. Dazu wird vorgeschlagen, dass der Hochsetzsteller bzw. der aktive Gleichrichter in Abhängigkeit wenigstens einer der folgenden Kriterien gesteuert wird:
- ein Oberwellenanteil des eingespeisten Stroms,
- ein Arbeitspunkt des Einspeisens,
- eine Anzahl zum Wechselrichten verwendeter Wechselrichter,
- ein Arbeitspunkt des Generators,
- ein Blindleistungssollwert oder ein Blindleistungsistwert,
- eine erfasste Netzspannung des elektrischen Versorgungsnetzes,
- ein Netzzustand des elektrischen Versorgungsnetzes,
- eine Mitsystemkomponente des eingespeisten Stroms,
- eine Gegensystemkomponente des eingespeisten Stroms,
- die Impedanz der Netzdrossel,
- eine Erregerleistung des Generators, wenn der Generator ein fremderregter Synchrongenerator ist,
- eine Vorgabe eines Netzbetreibers,
- eine Netzsensitivität des elektrischen Versorgungsnetzes.

Der Oberwellenanteil kann auch Einfluss auf die maximale Amplitude, nämlich besonders des Scheitelwertes, des im Wesentlichen, nämlich besonders bis auf den Oberwellenanteil, sinusförmigen Stroms haben. So kann ein Oberwellenanteil auf einen zu flachen Verlauf hindeuten, und zur Behebung kann die zweite Gleichspannung angehoben werden, damit dieser abgeflachte Bereich möglichst doch wieder als nicht abgeflachter Bereich ausgeführt werden kann. Es kommt aber auch in Betracht, dass eine solche Abflachung, um bei diesem Beispiel zu bleiben, gewollt ist und entsprechend die zweite Gleichspannung dann niedriger gewählt werden kann, weil bei dieser gewollten Abflachung dann nämlich nicht die volle Scheitelhöhe erzeugt zu werden braucht. Entsprechend kann das Einstellen der zweiten Gleichspannung in Abhängigkeit des Oberwellenanteils erfolgen.

Auch die weiteren Erläuterungen, die zur Einstellung der zweiten Gleichspannung gegeben werden, betreffen gleichermaßen bzw. sinngemäß das Steuern des Hochsetzstellers bzw. des aktiven Gleichrichters.

Durch einen Arbeitspunkt des Einspeisens, der besonders die Höhe der eingespeisten Blindleistung und eingespeisten Wirkleistung definiert, aber auch die Spannungshöhe dazu, hat Einfluss darauf, wie gut der einzuspeisende Strom erzeugt werden kann. Beispielsweise wäre bei hoher Spannung und gleichzeitig hohen Strömen, die den Arbeitspunkt entsprechend definieren, eine hohe zweite Gleichspannung zu wählen. Das kann durch die Betrachtung des Arbeitspunktes des Einspeisens berücksichtigt werden.

Eine Anzahl zum Wechselrichten verwendeter Wechselrichter hat Einfluss darauf, wie viel Blindleistung und damit auch wie viel entsprechender Blindstrom jeder Wechselrichter jeweils zu erzeugen hat. Dabei weist regelmäßig, und das wird hier vorzugsweise vorgeschlagen, jeder Wechselrichter eine eigene Netzdrossel auf. In diesem Fall kommt es somit nicht auf den von der Erzeugungseinheit insgesamt eingespeisten Strom an, sondern es wird hier eine Aufteilung auf mehrere Wechselrichter berücksichtigt. Dabei kommt auch in Betracht, dass nicht alle Wechselrichter der Erzeugungseinheit, wie beispielsweise eine Windenergieanlage, Blindstrom einspeisen. In diesem Fall ist die Anzahl der Wechselrichter relevant, die Blindstrom einspeisen.

Besonders der Arbeitspunkt des Generators wird durch den Hochsetzsteller bzw. den aktiven Gleichrichter beeinflusst. Der Hochsetzsteller bzw. aktive Gleichrichter kann dabei besonders die Höhe der Ausgangsspannung, nämlich der Statorspannung, am Ausgang des Generators beeinflussen. Das wäre insoweit eine quantitative Beeinflussung dieser Spannung. Es kommt aber auch eine qualitative Beeinflussung dieser Spannung in Betracht. Besonders der aktive Gleichrichter kann sehr gezielt die Qualität, also besonders auch Signalform, beeinflussen. Eine solche Beeinflussung ergibt sich aber auch durch einen Hochsetzsteller, dessen Einfluss auf die erste Gleichspannung über den Gleichrichter auf die Spannung am Ausgang des Synchrongenerators einwirken kann. Damit ist es vorteilhaft, den Arbeitspunkt des Generators zu betrachten. Der Arbeitspunkt des Generators kann hier besonders auch seine Drehzahl und derzeitige Leistungsabgabe betreffen. Er kann zusätzlich auch, wenn es ein Fremderregersynchrongerator ist, was hier vorzugsweise vorgeschlagen wird, die Erregung des Rotors betreffen.

Durch einen Blindleistungssollwert oder einen Blindleistungsistwert kann unmittelbar auch ein Spannungsabfall an einer Netzdrossel und damit ein Spannungsgefälle beeinflusst werden. Daher ist es auch vorteilhaft, einen Blindleistungswert für das Einstellen der zweiten Gleichspannung zu betrachten. Die Betrachtung eines Blindleistungssollwertes ist besonders dann vorteilhaft, wenn dieser leichter zu erfassen ist, als der Blindleistungsistwert. Dabei kann regelmäßig angenommen werden, dass sich auch ein Blindleistungsistwert entsprechend des Blindleistungssollwertes einstellt. Dabei ist die Betrachtung zumindest eines dieser beiden Werte, also Blindleistungssollwert oder Blindleistungsistwert für die Einstellung der zweiten Gleichspannung hilfreich, was hier erkannt wurde.

Eine erfasste Netzspannung des elektrischen Versorgungsnetzes, in das nämlich eingespeist wird, kann ebenfalls das Spannungsgefälle beeinflussen und ist daher vorteilhafterweise beim Einstellen der zweiten Gleichspannung zu berücksichtigen.

Auch ein Netzzustand des elektrischen Versorgungsnetzes, also ein Zustand, der über die Frage der erfassten Netzspannung hinausgeht, kann Einfluss auf das Einspeisen besonders des Blindstroms haben, aber auch auf das Einspeisen eines Wirkstroms.

Besonders fallen unter solche Netzzustände etwaige Netzfehler. Liegt ein Netzfehler vor, oder liegt eine Instabilität vor, oder lag kürzlich ein Netzfehler oder eine Instabilität vor, oder ist so etwas zu erwarten, so wird vorzugsweise eine eher höhere zweite Gleichspannung vorgeschlagen, um dadurch dem Wechselrichter zu ermöglichen, besser und flexibler arbeiten zu können. In solchen Fällen ist es zunächst weniger wichtig, ob gegebenenfalls durch die Wahl einer hohen zweiten Gleichspannung eine zu hohe Schaltfrequenz mit erhöhten Verlusten auftritt, denn in einem solchen Zustand ist zunächst das Gewährleisten der Netzstabilität wichtiger. Natürlich darf die zweite Gleichspannung nicht so groß gewählt werden, dass ein Betrieb des Wechselrichters gefährdet ist, beispielsweise durch Überhitzung. Eine geringe Laufzeitverkürzung durch eine kurzzeitig hohe Temperatur kann gegebenenfalls aber hingenommen werden.

Besonders wurde hier auch erkannt, dass bei einer Rückkehr eines Netzfehlers, besonders eines Spannungseinbruchs, eine Überspannung im Netz auftreten kann. Um trotz einer solchen Überspannung bzw. hohen Spannung im elektrischen Versorgungsnetz gut einspeisen zu können, kann für einen solchen Fall eine hohe zweite Gleichspannung vorgesehen sein, die schon eingestellt sein sollte, bevor die Überspannung bzw. hohe Spannung im Netz auftritt.

Vorzugsweise wird vorgeschlagen, dass der eingespeiste Strom nach dem Verfahren der symmetrischen Komponenten in eine Mitsystemkomponente und eine Gegensystemkomponente zerlegt wird. Zumindest wird vorzugsweise eine solche Betrachtung zugrundegelegt. Es wurde dann erkannt, dass es vorteilhaft sein kann, nur die Mitsystemkomponente des eingespeisten Stroms als Information über den eingespeisten Strom für das Einstellen der zweiten Gleichspannung zu berücksichtigen. Damit wird gut die Spannungshöhe der zweiten Gleichspannung eingestellt und letztlich kann dadurch auch gut die Mitsystemkomponente des eingespeisten Stroms erzeugt werden.

Gemäß einer Ausführungsform wurde aber erkannt, dass auch das Betrachten der Gegensystemkomponente des eingespeisten Stroms Aufschluss über den eingespeisten Strom geben kann und zwar in einer Art und Weise, die auch für die zweite Gleichspannung relevant ist.

Die Gegensystemkomponente gibt Aufschluss über die Unsymmetrie des eingespeisten dreiphasigen Stroms. Das kann dazu führen, dass auch die Spannungen der Phasen unterschiedlich sind, was zu unterschiedlichen Spannungsgefällen der Phasen führen kann. Die Höhe der zweiten Gleichspannung wirkt sich auf alle Phasen aus. Sind die Phasen, besonders eines betrachteten abgegebenen Stroms, nämlich des Einspeise-Iststroms, unterschiedlich, besteht die Gefahr, dass die zweite Gleichspannung für eine der Phasen schlecht passt. Um dem entgegenzuwirken, wird die Berücksichtigung der Gegensystemkomponente vorgeschlagen.

Vorzugsweise wird vorgeschlagen, dass die zweite Gleichspannung dabei nach der größten Spannung der drei Phasen eingestellt wird.

Es kommt aber auch in Betracht, dass die zweite Gleichspannung phasenweise schwankt und entsprechend die zweite Gleichspannung in geringem Maße oszillieren kann. Auch ein solches Oszillieren der zweiten Gleichspannung, besonders in Abhängigkeit der Gegensystemkomponente des eingespeisten Stroms, wird vorzugsweise vorgeschlagen. Die zweite Gleichspannung wird also gemäß einer Ausführungsform so gesteuert, dass sie schwankt bzw. oszilliert.

Eine Erregerleistung des Generators kann Einfluss auf das Betriebsverhalten und damit auch auf die Ausgangsspannung haben und es kann dabei auch eine Wechselwirkung zwischen der Spannung am Ausgang des Generators und der Erregerleistung bestehen. Insoweit kann eine Berücksichtigung des Arbeitspunktes des Generators hilfreich sein, wie schon erläutert wurde. Vorzugsweise kommt auch eine einzelne Betrachtung der Erregerleistung des Generators in Betracht, wenn der Generator ein fremderregter Synchrongenerator ist. Es kann dann eine verbesserte Abstimmung mit dem Generator vorgenommen werden.

Es wurde auch erkannt, dass das Einspeisen elektrischen Stromes in das elektrische Versorgungsnetz von einer Vorgabe des Netzbetreibers abhängen kann. Eine solche Vorgabe kann besonders eine gewünschte Blindleistung betreffen, die einzuspeisen ist, es kann aber auch eine gewünschte Wirkleistung betreffen. Statt absoluter Werte können auch relative Werte vorgegeben werden. Besonders können relative Werte für eine Reduzierung oder Erhöhung der Wirkleistung und/oder Blindleistung vorgegeben werden. Um diese Vorgaben besonders gut umsetzen zu können, wird vorgeschlagen, die zweite Gleichspannung entsprechend anzupassen, also zu erhöhen oder zu verringern, oder gleichzulassen.

Eine Netzsensitivität beschreibt für einen Netzanschlusspunkt das Verhältnis einer Spannungsänderung zu einer Änderung der eingespeisten Leistung an dem Netzanschlusspunkt, die diese Spannungsänderung hervorgerufen hat. Besonders beschreibt hier die Netzsensitivität das Verhältnis der Spannungsänderung zu der Änderung der eingespeisten Wirkleistung, die diese Netzspannungsänderung hervorgerufen hat, an diesem Netzanschlusspunkt. Damit kann das elektrische Versorgungsnetz, bezogen auf diesen Netzanschlusspunkt, bewertet werden, ob es gerade mehr oder weniger stabil ist, ob es also auf Änderungen stark oder schwach reagiert. Besonders bei einer hohen Netzsensitivität, wenn das elektrische Versorgungsnetz an diesem Netzanschlusspunkt also stark auf Veränderungen reagiert, wird vorgeschlagen, die zweite Gleichspannung höher einzustellen als bei einer geringeren Netzsensitivität. Damit kann besonders auch bei einer hohen Netzsensitivität besser, schneller bzw. nachhaltiger auf Änderungen reagiert werden. Beispielsweise kann einem notwendigen Bedarf an Blindleistung zur Netzstützung schneller nachgekommen werden.

Gemäß einer Ausführungsform wird vorgeschlagen, dass bei Vorliegen der ersten Gleichspannung, wenn also eine erste Gleichspannung zusammen mit einem Hochsetzsteller verwendet wird, diese erste Gleichspannung durch direktes Messen der ersten Gleichspannung und durch Erfassen der vom Generator erzeugten Leistung ermittelt wird. Dazu wird ergänzend oder alternativ vorgeschlagen, dass die erste Gleichspannung größer als 100 V und kleiner als 800 V, insbesondere kleiner 400 V ist. Dadurch kann besonders erreicht werden, dass diese erste Gleichspannung besonders gut für den Betrieb des Generators geeignet ist, gleichzeitig aber eine gute Basis liefert, die zweite Gleichspannung einzustellen. Die erste Gleichspannung kann durch unmittelbares Messen bzw. direktes Messen gut erfasst werden, alternativ kann sie durch Erfassen der vom Generator erzeugten Leistung ermittelt werden, was ein Messmittel an der ersten Gleichspannung einsparen kann, wenn, was vorzugsweise vorgeschlagen wird, eine Steuerung verwendet wird, die die vom Generator erzeugten Leistungen ohnehin kennt.

Gemäß einer weiteren Ausführungsform wird vorgeschlagen, dass das Hochsetzverhältnis so eingestellt wird bzw. das Gleichrichten der ersten Wechselspannung in die zweite Gleichspannung so gesteuert wird, dass die zweite Gleichspannung größer ist als 400 V, insbesondere größer als 600 V, und dass sie dabei, also in beiden Fällen, kleiner als 1000 V ist. Somit wird ein Bereich von 400 bis 1200 V gewählt, vorzugsweise von 600 bis 1000 V, in der ein gutes Einspeisen in das elektrische Versorgungsnetz noch ermöglicht wird, gleichzeitig aber auch eine gegebenenfalls effizient niedrige Einstellung der zweiten Gleichspannung ermöglicht wird.

Erfindungsgemäß wird zudem eine Windenergieanlage vorgeschlagen, die zumindest ein Verfahren der vorstehend beschriebenen Ausführungsformen umsetzt. Erfindungsgemäß wird besonders eine Windenergieanlage zum Einspeisen elektrischer Leistung in ein elektrisches Versorgungsnetz vorgeschlagen, die einen Generator zum Erzeugen elektrischer Leistung und zum Abgeben einer ersten Wechselspannung aufweist. Sie weist auch wenigstens ein Gleichrichtmittel zum Gleichrichten der ersten Wechselspannung in eine erste Gleichspannung auf, und wenigstens ein Hochsetzmittel zum Hochsetzen der ersten Gleichspannung in eine zweite Gleichspannung, insbesondere so, dass die zweite Gleichspannung zu der ersten Gleichspannung ein Hochsetzverhältnis aufweist.

Das erste Gleichrichtmittel kann besonders als passiver oder anderer Gleichrichter ausgebildet sein. Das Hochsetzmittel ist insbesondere als Hochsetzsteller ausgebildet.

Statt des ersten Gleichrichtmittels und des Hochsetzmittels kann die Windenergieanlage als Alternative einen aktiven Gleichrichter aufweisen, zum Gleichrichten der ersten Wechselspannung in die zweite Gleichspannung, ohne Erzeugen der ersten Gleichspannung.

Für beide Alternativen ist dann wieder wenigstens ein Wechselrichter vorgesehen zum Wechselrichten der zweiten Gleichspannung in eine zweite Wechselspannung zum Einspeisen elektrischer Leistung in das elektrische Versorgungsnetz in Abhängigkeit eines Einspeisesollwertes. Schließlich ist ein Einstellmittel vorgesehen, das zum Einstellen der zweiten Gleichspannung in Abhängigkeit des Einspeisesollwertes oder -istwertes vorbereitet ist. Das Einstellmittel ist dabei so vorbereitet, dass die zweite Gleichspannung in Abhängigkeit einer Erhöhung des Einspeisesollwertes bzw. -istwertes erhöht wird. Das Einstellmittel wird vorzugsweise als Steuerungseinstelleinrichtung vorgesehen, die als Prozessrechner oder Teil davon ausgebildet sein kann. Sie kann dafür den aktiven Gleichrichter bzw. das Hochsetzmittel ansteuern und außerdem oder alternativ den wenigstens einen Wechselrichter, um dadurch die Einstellung der zweiten Gleichspannung vorzunehmen. Besonders hängt die zweite Gleichspannung von der von dem Generator erzeugten Leistung und der in das Netz eingespeisten Leistung, insbesondere Blind- und/oder Wirkleistung, ab. Dieses Zusammenspiel kann besonders durch das Einstellmittel berücksichtigt werden bzw. beim Umsetzen von dem aktiven Gleichrichter bzw. dem Hochsetzmittel und dem wenigstens einen Wechselrichter berücksichtigt werden.

Vorzugsweise ist jedem der Wechselrichter eine Netzdrossel nachgeschaltet und der jeweils durch den Wechselrichter erzeugte Strom wird durch diese Netzdrossel geführt. Im einfachsten Fall bedeutet das, dass nur ein Wechselrichter mit einer Netzdrossel vorgesehen ist. Vorzugsweise werden aber mehrere Wechselrichter verwendet.

Erfindungsgemäß wird auch ein Windpark mit mehreren Windenergieanlagen gemäß wenigstens einer vorstehend beschriebenen Ausführungsform vorgeschlagen. Besonders kann hier jede Windenergieanlage für sich die zweite Gleichspannung wie gemäß wenigstens einer beschriebenen Ausführungsform einstellen. Es kommt aber auch oder zusätzlich in Betracht, dass der Windpark einen zentralen Parkrechner aufweist und dieser den Windenergieanlagen Informationen übermittelt, die zur Einstellung der zweiten Gleichspannung verwendet werden. Insbesondere kommt hierbei in Betracht, dass der zentrale Parkrechner, oder eine andere Zentraleinrichtung, Informationen von einem Netzbetreiber erhält und diese oder daraus abgeleitete Informationen an die Windenergieanlagen überträgt. Die Windenergieanlagen können dann davon abhängig gesteuert werden, insbesondere die zweite Gleichspannung abhängig davon einstellen.

Nachfolgend wird die Erfindung beispielhaft anhand von Ausführungsformen unter Bezugnahme auf die begleitenden Figuren näher erläutert.
- Figur 1: zeigt eine Windenergieanlage in einer perspektivischen Darstellung.
- Figur 2: zeigt einen Windpark in einer schematischen Darstellung.
- Figur 3: zeigt schematisch einen Generator einer Windenergieanlage und seinen Anschluss an ein elektrisches Versorgungsnetz gemäß einer Ausführungsform.
- Figur 4: zeigt einen Generator einer Windenergieanlage und seinen Anschluss an ein elektrisches Versorgungsnetz gemäß einer weiteren Ausführungsform.

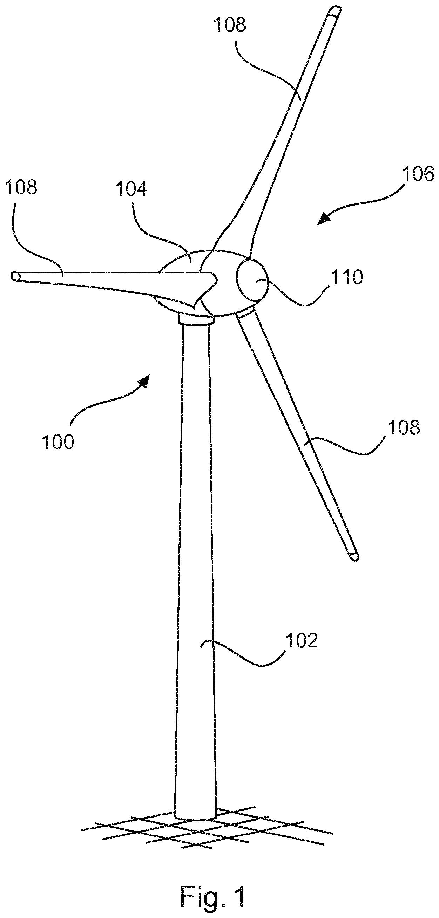

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

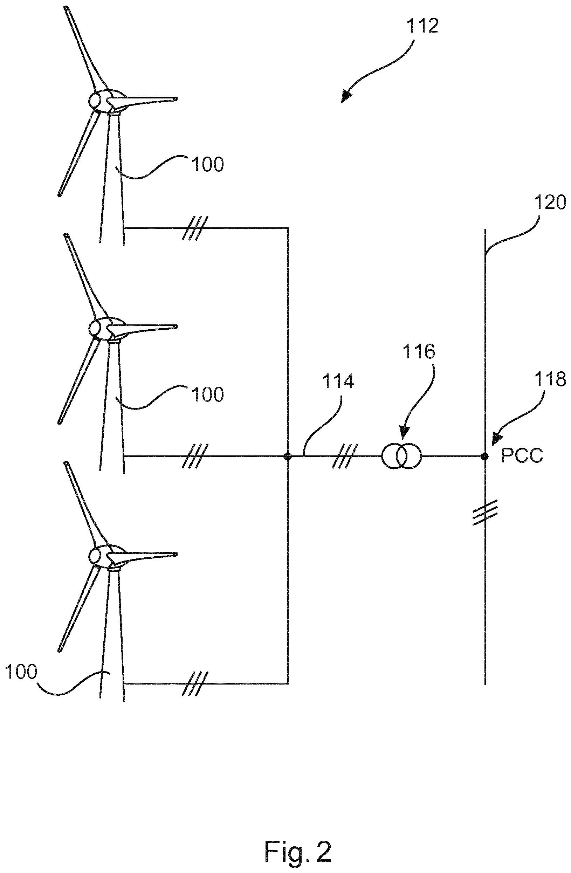

Figur 2 zeigt einen Windpark 112 mit beispielhaft drei Windenergieanlagen 100, die gleich oder verschieden sein können. Die drei Windenergieanlagen 100 stehen somit repräsentativ für im Grunde eine beliebige Anzahl von Windenergieanlagen eines Windparks 112. Die Windenergieanlagen 100 stellen ihre Leistung, nämlich insbesondere den erzeugten Strom über ein elektrisches Parknetz 114 bereit. Dabei werden die jeweils erzeugten Ströme bzw. Leistungen der einzelnen Windenergieanlagen 100 aufaddiert und meist ist ein Transformator 116 vorgesehen, der die Spannung im Park hochtransformiert, um dann an dem Einspeisepunkt 118, der auch allgemein als PCC bezeichnet wird, in das Versorgungsnetz 120 einzuspeisen. Fig. 2 ist nur eine vereinfachte Darstellung eines Windparks 112, die beispielsweise keine Steuerung zeigt, obwohl natürlich eine Steuerung vorhanden ist. Auch kann beispielsweise das Parknetz 114 anders gestaltet sein, in dem beispielsweise auch ein Transformator am Ausgang jeder Windenergieanlage 100 vorhanden ist, um nur ein anderes Ausführungsbeispiel zu nennen.

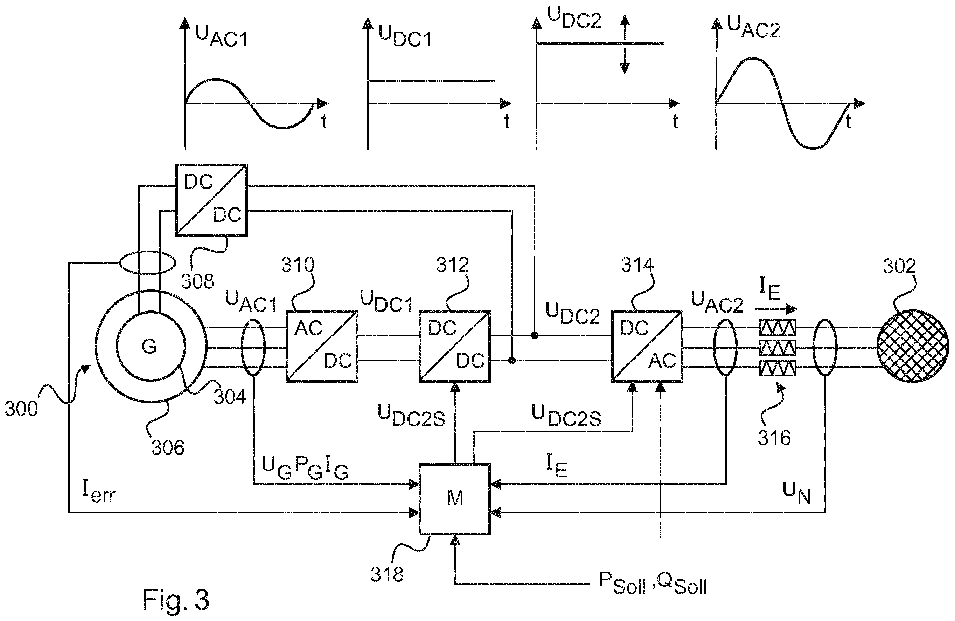

Figur 3 zeigt schematisch einen Generator 300, der in ein elektrisches Versorgungsnetz 302 einspeist bzw. einspeisen soll. Der Generator 300 ist als fremderregter Synchrongenerator ausgebildet und weist einen Läufer 304 und einen Stator 306 auf. Der Läufer 304, der auch als Rotor bezeichnet werden kann, hier aber als Läufer bezeichnet wird, um etwaige Verwechslungen mit einem aerodynamischen Rotor der Windenergieanlage zu vermeiden, dreht sich relativ zum Stator 306.

Der gezeigte Generator 300 ist hier eine fremderregte Synchronmaschine und dazu erhält der Läufer 304 von einem Erregersteller 308 einen Erregerstrom lₑᵣᵣ.

Der Generator 300 gibt von dem Stator 306 einen Statorspannung ab, die hier die erste Wechselspannung U_{AC1} bildet. Diese erste Wechselspannung U_{AC1} ist hier dreiphasig dargestellt. Vorzugsweise, was für sämtliche Ausführungsformen gilt, kann auch vorgesehen sein, zwei dreiphasige Wechselspannungen auszugeben, die entsprechend eine sechsphasige Wechselspannung bilden.

Diese erste Wechselspannung U_{AC1} wird dann mittels eines ersten Gleichrichtmittels, das hier als passiver Gleichrichter 310 ausgebildet ist, in die erste Gleichspannung U_{DC1} gleichgerichtet.

Die erste Gleichspannung U_{DC1} wird mittels des Hochsetzstellers 312 in die zweite Gleichspannung U_{DC2} hochgesetzt. Diese zweite Gleichspannung U_{DC2} kann auch als Quelle für den Erregersteller 308 dienen, was aber nur eine von mehreren Möglichkeiten für die Versorgung des Erregerstellers 308 ist.

Die zweite Gleichspannung U_{DC2} wird dann mittels des Wechselrichters 314 in die zweite Wechselspannung U_{AC2} gewandelt. Dazu wird hier vorzugsweise ein Toleranzbandverfahren vorgeschlagen, das den resultierenden Strom zurückführt und durch entsprechende Schalthandlungen in einem Toleranzband zu führen versucht. Details dazu sind hier nicht wiedergegeben. Abhängig von dieser zweiten Wechselspannung U_{AC2} ergibt sich dann ein Strom, der durch die Netzdrossel 316 fließt und dann weiter in das elektrische Versorgungsnetz 302 fließt, dort also eingespeist wird. Die Einspeisung kann grundsätzlich auch über einen Transformator erfolgen, der ein Hochtransformieren der zweiten Wechselspannung U_{AC2} bzw. der Wechselspannung am Ausgang der Netzdrossel vorsehen kann, je nach Spannungshöhe im elektrischen Versorgungsnetz 302. Auf dieses Hochtransformieren kommt es hier aber nicht an, so dass ein solcher Transformator der Einfachheit halber weggelassen wurde.

Es wird nun vorgeschlagen, die zweite Gleichspannung U_{DC2} bedarfsabhängig zu erhöhen oder zu verringern. Das kann durch den Hochsetzsteller 312 und/oder den Wechselrichter 314 erfolgen. Dazu ist ein Mess- und Steuerblock 318 vorgesehen, der dazu einen entsprechenden Sollwert U_{DC2S} erzeugt und entsprechend an den Hochsetzsteller 312 oder den Wechselrichter 314 gibt. In Figur 3 sind beide Vorgaben gezeigt, also an den Hochsetzsteller 312 und an den Wechselrichter 314, alternativ kann aber vorgesehen sein, nur eine von beiden Möglichkeiten zu verwenden.

Der Mess- und Steuerblock 318 erhält dazu zumindest einen Einspeisesollwert, der hier als P_{Soll} und Q_{Soll} veranschaulicht ist. Vorzugsweise wird tatsächlich die Sollwirkleistung und/oder Sollblindleistung verwendet, es kommen aber auch andere und insbesondere kommen auch zusätzliche Größen in Betracht.

Die Verwendung von P_{Soll} und/oder Q_{Soll} ist somit die Verwendung des entsprechenden Einspeisesollwertes. Insoweit bezeichnet P_{Soll} bzw. Q_{Soll} die einzuspeisende Wirkleistung bzw. einzuspeisende Blindleistung und das sind somit jeweils Einspeisesollwerte. Diese Einspeisesollwerte werden auch an den Wechselrichter 314 gegeben, denn dieser soll die entsprechende Einspeisung steuern. Es ist zu beachten, dass Figur 3 insoweit veranschaulichend ist und es kommt auch in Betracht, dass beispielsweise der Wechselrichter 314 seine Sollwerte von sich aus an den Mess- und Steuerblock 318 gibt. Es kommt auch in Betracht, dass die Funktionalität des symbolisch dargestellten Mess- und Steuerblocks 318 in einem gemeinsamen Prozessrechner untergebracht ist, der zumindest den Wechselrichter 314 und/oder den Hochsetzsteller 312 steuert.

Zur Umsetzung kann dann der Hochsetzsteller 312 besonders durch ein Tastverhältnis ein Hochsetzverhältnis von der ersten zur zweiten Gleichspannung U_{DC1}, U_{DC2} umsetzen. Der Wechselrichter 314, für den die zweite Gleichspannung U_{DC2} auch seine Zwischenkreisspannung bilden kann, kann eine Umsetzung der Steuerung dieser zweiten Gleichspannung U_{DC2} dadurch erfolgen, dass mehr oder weniger Leistung eingespeist wird. Dabei können aber geringe Änderungen ausreichen, so dass dennoch im Wesentlichen die Vorgabe der Sollwerte P_{Soll} und Q_{Soll} eingehalten werden kann. Es kommt aber auch in Betracht, die zweite Gleichspannung über die Vorgabe von P_{Soll} zu steuern, zumindest teilweise.

Das Einstellen der zweiten Gleichspannung U_{DC2} kann auch weitere Eingangsgrößen berücksichtigen, was hier als Berücksichtigung weiterer Eingangsgrößen durch den Mess- und Steuerblock 318 veranschaulicht ist, wobei aber auch tatsächlich eine Variante ist, dass ein solcher Mess- und Steuerblock 318 als eigenständiges Element vorgesehen ist.

Jedenfalls veranschaulicht die Figur 3 insoweit, dass eine Erregerleistung bzw. ein Erregerstrom lₑᵣᵣ berücksichtigt wird. Dazu kann ein solcher von dem Erregersteller 308 erzeugter Strom erfasst werden, was Figur 3 symbolisiert. Alternativ kann aber auch der Erregersteller 308 eine entsprechende Information ausgeben.

Es können auch Ausgangswerte des Generators 300 verwendet werden, und dabei kann auch sein Arbeitspunkt verwendet werden, und um das zu verdeutlichen, werden Werte zwischen dem Generator 300 und dem passiven Gleichrichter 310 aufgenommen, die vereinfachend als Generatorspannung U_{G}, Generatorleistung P_{G} und Generatorstrom I_{G} veranschaulicht sind.

Es kommt auch in Betracht, den eingespeisten Strom I_{E} mit zu berücksichtigen und es kommt auch in Betracht, die Netzspannung U_{N} zu berücksichtigen. Alle diese Berücksichtigungen können grundsätzlich auch kombiniert werden. Durch die Kombinationen ergeben sich bessere und differenziertere Grundlagen für die Einstellung der zweiten Gleichspannung U_{DC2}.

Ergänzend ist in Figur 3 noch durch vier schematische Diagramme ein Zeitverlauf für die erste Wechselspannung U_{AC1}, die erste Gleichspannung U_{DC1}, die zweite Gleichspannung U_{DC2} und die zweite Wechselspannung U_{AC2} dargestellt, nämlich jeweils oberhalb des Bereichs der gezeigten Struktur, in der sie auch auftreten. Daraus ist, was eine idealisierende Darstellung ist, zu erkennen, dass die erste Wechselspannung U_{AC1} in die erste Gleichspannung U_{DC1}gleichgerichtet wird und diese dann auf die Spannungshöhe der zweiten Gleichspannung U_{DC2} erhöht wird. In dem Diagramm zur zweiten Gleichspannung U_{DC2} ist durch zwei Pfeile angedeutet, dass die Spannungshöhe erhöht oder verringert werden kann. Die zweite Gleichspannung U_{DC2} wird dann in die zweite Wechselspannung U_{AC2} wechselgerichtet.

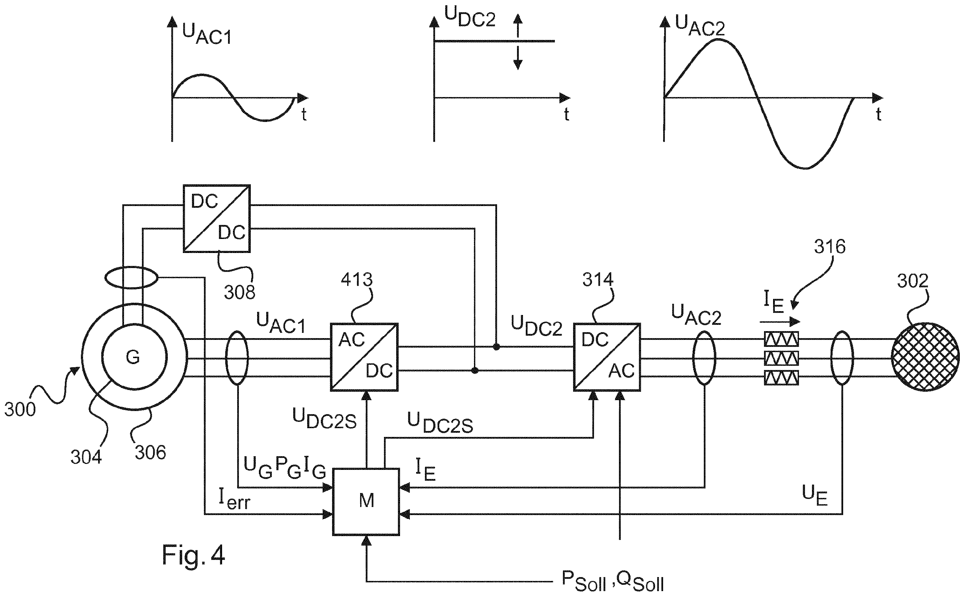

Figur 4 entspricht im Wesentlichen der Figur 3, mit dem Unterschied, dass statt des passiven Gleichrichters 310 und des Hochsetzstellers 312 ein aktiver Gleichrichter 413 vorgesehen ist. Dieser aktive Gleichrichter 413 richtet die erste Wechselspannung U_{AC1} unmittelbar in die zweite Gleichspannung U_{DC2} gleich.

Obwohl hierbei auch unterschiedliche Effekte auf die erste Wechselspannung U_{AC1} entstehen können, was wiederum auch Einfluss auf den Betrieb des Generators 300 haben kann, werden in Figur 4 dennoch vereinfachend dieselben oder zumindest ähnlichen Elemente im Vergleich zur Struktur der Figur 3 mit denselben Bezugszeichen bezeichnet. Diese können tatsächlich identisch sein, sind zumindest in ihrer Wirkungsweise ähnlich. Insoweit wird auch zur Erläuterung auf die Erläuterung zur Figur 3 verwiesen.

In der Struktur der Figur 4 ist es dabei so, dass das Einstellen der zweiten Gleichspannung U_{DC2} durch den aktiven Gleichrichter 413 und/oder durch den Wechselrichter 314 vorgenommen werden kann. Auch hier kommt eine Kombination in Betracht.

Zum Einstellen der zweiten Gleichspannung U_{DC2} durch den aktiven Gleichrichter 413 kann dieser aktive Gleichrichter 413 entsprechend seine Gleichrichtmittel ansteuern. Solche ansteuerbaren Gleichrichtmittel können beispielsweise steuerbare Thyristoren oder IGBTs sein.

In Figur 4 sind somit im Vergleich zu Figur 3 nur drei Spannungsdiagramme dargestellt, die die jeweilige Spannung schematisch zeigen und auch jeweils in der Darstellung der Figur 4 oberhalb der jeweiligen Stelle der Struktur eingezeichnet sind, wo die entsprechende Spannung auftritt.

Entsprechend zeigen die drei Diagramme zunächst die erste Wechselspannung U_{AC1}, die mittels aktiven Gleichrichters in die zweite Gleichspannung U_{DC2} gleichgerichtet wird und aus der dann die zweite Wechselspannung U_{AC2} durch Wechselrichten erzeugt wird. Auch hier ist in dem Diagramm angedeutet, dass die Höhe der zweiten Gleichspannung UDC2 verändert werden kann.

## Patentansprüche

1. Verfahren zum Einspeisen elektrischer Leistung in ein elektrisches Versorgungsnetz (302), umfassend die Schritte:
- Gleichrichten einer ersten Wechselspannung (U_{AC1}) einer von einem Generator (300) erzeugten elektrischen Leistung in eine erste Gleichspannung (U_{DC1}), und
- Hochsetzen der ersten Gleichspannung (U_{DC1}) in eine zweite Gleichspannung (U_{DC2}) von einem Hochsetzmittel (312), insbesondere so, dass die zweite Gleichspannung (U_{DC2}) zu der ersten Gleichspannung (U_{DC1}) ein Hochsetzverhältnis aufweist, oder
- Gleichrichten der ersten Wechselspannung (U_{AC1}) in die zweite Gleichspannung (U_{DC2}) von einem aktiven Gleichrichter (413) ohne Erzeugen der ersten Gleichspannung (U_{DC1}),
- Wechselrichten der zweiten Gleichspannung (U_{DC2}) in eine zweite Wechselspannung (U_{AC2}) von einem Wechselrichter (314) zum Einspeisen der elektrischen Leistung in das elektrische Versorgungsnetz (302) in Abhängigkeit eines Einspeisesollwertes (P_{Soll}, Q_{Soll}),
**dadurch gekennzeichnet dass**,
die zweite Gleichspannung (U_{DC2}) in Abhängigkeit des Einspeisesollwertes und/oder -istwertes (P_{Soll'} Q_{Soll}) eingestellt wird, und wobei die zweite Gleichspannung (U_{DC2}) in Abhängigkeit einer Erhöhung des Einspeisesollwertes bzw. -istwertes (P_{Soll'} Q_{Soll}) einerseits von dem Hochsetzmittel (312) oder andererseits entweder von dem aktiven Gleichrichter (413) oder von dem Wechselrichter (314) erhöht wird.

2. Verfahren nach Anspruch 1, **dadurch gekennzeichnet, dass** zum Einstellen der zweiten Gleichspannung (U_{DC2})
- das Hochsetzverhältnis der zweiten zur ersten Gleichspannung (U_{DC1}) in Abhängigkeit des Einspeisesollwertes (P_{Soll}, Q_{Soll}) eingestellt wird, wobei insbesondere das Hochsetzverhältnis größer als 1 und kleiner als 6 ist, vorzugsweise kleiner als 4 ist, insbesondere kleiner als 2 ist und/oder das Hochsetzverhältnis zusätzlich in Abhängigkeit der ersten Gleichspannung (U_{DC1}) eingestellt wird,
- bzw. das Gleichrichten der ersten Wechselspannung (U_{AC1}) in die zweite Gleichspannung (U_{DC2}) in Abhängigkeit des Einspeisesollwertes (P_{Soll}, Q_{Soll}) gesteuert wird.

3. Verfahren nach Anspruch 1 oder 2, **dadurch gekennzeichnet, dass**
- der Einspeisesollwert (P_{Soll}, Q_{Soll}) ein Blindleistungssollwert ist.

4. Verfahren nach einem der vorstehenden Ansprüche, **dadurch gekennzeichnet, dass**
- das Einstellen der zweiten Gleichspannung (U_{DC2}) in Abhängigkeit des Blindstromanteils der eingespeisten elektrischen Leistung erfolgt.

5. Verfahren nach einem der vorstehenden Ansprüche, **dadurch gekennzeichnet, dass** zum Wechselrichten der zweiten Gleichspannung (U_{DC2}) in die zweite Wechselspannung (U_{AC2}) ein Toleranzbandverfahren verwendet wird.

6. Verfahren nach einem der vorstehenden Ansprüche, **dadurch gekennzeichnet, dass** die zweite Gleichspannung (U_{DC2}) in Abhängigkeit einer aus dem elektrischen Versorgungsnetz (302) aufgenommenen Leistung, insbesondere Blindleistung, eingestellt wird.

7. Verfahren nach einem der vorstehenden Ansprüche, **dadurch gekennzeichnet, dass**
- der Generator (300) in Abhängigkeit eines vorherrschenden Windes und/oder in Abhängigkeit einer Vorgabe einen Arbeitspunkt aufweist und
- das Einstellen der zweiten Gleichspannung (U_{DC2}) zusätzlich in Abhängigkeit des Arbeitspunktes erfolgt.

8. Verfahren nach einem der vorstehenden Ansprüche, **dadurch gekennzeichnet, dass** die zweite Gleichspannung (U_{DC2}) in Abhängigkeit einer Netzdrossel (316) eingestellt wird, über die die elektrische Leistung in das elektrische Versorgungsnetz (302) eingespeist wird.

9. Verfahren nach einem der vorstehenden Ansprüche, **dadurch gekennzeichnet, dass**
- zum Hochsetzen der ersten Gleichspannung (U_{DC1}) in die zweite Gleichspannung (U_{DC2}) ein Hochsetzsteller (312) verwendet wird bzw. zum Gleichrichten der ersten Wechselspannung (U_{AC1}) in die zweite Gleichspannung (U_{DC2}) ohne Erzeugen der ersten Gleichspannung (U_{DC1}) ein aktiver Gleichrichter (310; 413) verwendet wird und
- der Hochsetzsteller (312) bzw. der aktive Gleichrichter (310; 413) gesteuert wird in Abhängigkeit wenigstens eines Kriteriums aus der Liste aufweisend
- einen Oberwellenanteil des eingespeisten Stroms (I_{E}),
- einen Arbeitspunkt des Einspeisens,
- eine Anzahl zum Wechselrichten verwendeter Wechselrichter (314),
- einen bzw. den Arbeitspunkt des Generators (300),
- einen Blindleistungssollwert oder-istwert,
- eine erfasste Netzspannung (U_{N}) des elektrischen Versorgungsnetzes (302),
- einen Netzzustand des elektrischen Versorgungsnetzes (302),
- eine Mitsystemkomponente des eingespeisten Stroms (I_{E}),
- eine Gegensystemkomponente des eingespeisten Stroms (I_{E}) und
- die Impedanz einer bzw. der Netzdrossel (316),
- eine Erregerleistung des Generators (300), wenn der Generator (300) ein fremderregter Synchrongenerator ist,
- eine Vorgabe eines Netzbetreibers, und
- eine Netzsensitivität des elektrischen Versorgungsnetzes (302).

10. Verfahren nach einem der vorstehenden Ansprüche, **dadurch gekennzeichnet, dass** bei Vorliegen der ersten Gleichspannung (U_{DC1})
- diese durch direktes Messen der ersten Gleichspannung (U_{DC1}) oder durch Erfassen der vom Generator (300) erzeugten Leistung ermittelt wird und/oder
- die erste Gleichspannung (U_{DC1}) größer als 100V und kleiner als 800V, insbesondere kleiner als 400V ist.

11. Verfahren nach einem der vorstehenden Ansprüche, **dadurch gekennzeichnet, dass**
- das Hochsetzverhältnis so eingestellt wird, bzw.
- das Gleichrichten der ersten Wechselspannung (U_{AC1}) in die zweite Gleichspannung (U_{DC2}) so gesteuert wird, dass
- die zweite Gleichspannung (U_{DC2}) größer ist als 400 V, insbesondere größer als 600V, und kleiner als 1200V.

12. Windenergieanlage (100) zum Einspeisen elektrischer Leistung in ein elektrisches Versorgungsnetz (302), umfassend
- einen Generator (300) zum Erzeugen elektrischer Leistung und zum Abgeben einer ersten Wechselspannung (U_{AC1}),
- wenigstens ein erstes Gleichrichtmittel zum Gleichrichten der ersten Wechselspannung (U_{AC1}) in eine erste Gleichspannung (U_{DC1}), und
- wenigstens ein Hochsetzmittel zum Hochsetzen der ersten Gleichspannung (U_{DC1}) in eine zweite Gleichspannung (U_{DC2}), insbesondere so, dass die zweite Gleichspannung (U_{DC2}) zu der ersten Gleichspannung (U_{DC1}) ein Hochsetzverhältnis aufweist, oder
- einen aktiven Gleichrichter (310; 413), zum Gleichrichten der ersten Wechselspannung (U_{AC1}) in die zweite Gleichspannung (U_{DC2}) ohne Erzeugen der ersten Gleichspannung (U_{DC1}),
- wenigstens einen Wechselrichter (314) zum Wechselrichten der zweiten Gleichspannung (U_{DC2}) in eine zweite Wechselspannung (U_{AC2}) zum Einspeisen der elektrischen Leistung in das elektrische Versorgungsnetz (302) in Abhängigkeit eines Einspeisesollwertes (P_{Soll}, Q_{Soll}),
**dadurch gekennzeichnet dass,**
die Windenergieanlage weiter noch ein Einstellmittel (318), vorbereitet zum Einstellen der zweiten Gleichspannung (U_{DC2}) in Abhängigkeit des Einspeisesollwertes und/oder -istwertes (P_{Soll'} Q_{Soll}), umfasst, und wobei die zweite Gleichspannung (U_{DC2}) in Abhängigkeit einer Erhöhung des Einspeisesollwertes bzw. -istwertes (P_{Soll'} Q_{Soll}) einerseits von dem Hochsetzmittel, oder andererseits entweder von dem aktiven Gleichrichter oder von dem Wechselrichter erhöht wird.

13. Windenergieanlage (100) nach Anspruch 12, **dadurch gekennzeichnet, dass** sie dazu vorbereitet ist, ein Verfahren nach einem der Ansprüche 1 bis 11 auszuführen.

14. Windenergieanlage (100) nach Anspruch 12 oder 13, **dadurch gekennzeichnet, dass** jedem der Wechselrichter (314) eine Netzdrossel (316) nachgeschaltet ist.

15. Windpark (112) mit mehreren Windenergieanlagen (100) nach einem der Ansprüche 12 bis 14.

## Claims

1. A method for feeding electrical power into an electrical supply grid (302), comprising the steps:
- rectifying a first AC voltage (U_{AC1}) of electrical power, which is generated by a generator (300), into a first DC voltage (U_{DC1}),and
- stepping up the first DC voltage (U_{DC1}) to a second DC voltage (U_{DC2}) from a step-up converter (312), in particular so that the second DC voltage (U_{DC2}) has a step-up ratio relative to the first DC voltage (U_{DC1}),or
- rectifying the first AC voltage (U_{AC1}) into the second DC voltage (U_{DC2}) from the active rectifier (413) without generating the first DC voltage (U_{DC1}),
- inverting the second DC voltage (U_{DC2}) into a second AC voltage (U_{AC2}) from an inverter (314) for feeding the electrical power into the electrical supply grid (302) depending on a feed set point value (P_{Soll}, Q_{Soll}),
**characterized in that**,
the second DC voltage (U_{DC2}) is set as a function of the feed set point value and/or actual value of the feed (P_{Soll}, Q_{Soll}), and wherein the second DC voltage (U_{DC2}) is increased depending on an increase in the feed set point value or actual value (P_{Soll}, O_{Soll}) of the feed on the one hand by the step-up converter (312) or on the other hand either by the active rectifier (413) or by the inverter (314) .

2. The method as claimed in claim 1, **characterized in that** for setting the second DC voltage (U_{DC2})
- the step-up ratio of the second DC voltage to the first DC voltage (U_{DC1}) is set depending on the feed set point value (P_{Soll}, Q_{Soll}), wherein the step-up ratio is in particular greater than 1 and less than 6, preferably less than 4, in particular less than 2, and/or the step-up ratio is additionally set depending on the first DC voltage (U_{DC1}),
- or rectifying the first AC voltage (U_{AC1}) into the second DC voltage (U_{DC2}) is controlled depending on the feed set point value (P_{Soll}, Q_{Soll}).

3. The method as claimed in claim 1 or 2, **characterized in that**
- the feed set point value is a reactive power set point value (P_{Soll}, Q_{Soll}).

4. The method as claimed in one of the preceding claims, **characterized in that**
- the second DC voltage (U_{DC2}) is set depending on the reactive current component of the electrical power which is fed in.

5. The method as claimed in one of the preceding claims, **characterized in that** a tolerance band method is used for inverting the second DC voltage (U_{DC2}) into the second AC voltage (UAC2).

6. The method as claimed in one of the preceding claims, **characterized in that** the second DC voltage (U_{DC2}) is set depending on power which is received from the electrical supply grid (302), in particular reactive power.

7. The method as claimed in one of the preceding claims, **characterized in that**
- the generator (300) has an operating point depending on a prevailing wind and/or depending on a specification and
- the second DC voltage (U_{DC2}) is additionally set depending on the operating point.

8. The method as claimed in one of the preceding claims, **characterized in that** the second DC voltage (U_{DC2}) is set depending on a power choke (316), via which the electrical power is fed into the electrical supply grid (302).

9. The method as claimed in one of the preceding claims, **characterized in that**
- a step-up converter (312) is used for stepping up the first DC voltage (U_{DC1}) to the second DC voltage (U_{DC2}), or an active rectifier (310, 413) is used for rectifying the first AC voltage (U_{AC1}) into the second DC voltage (U_{DC2}) without generating the first DC voltage (U_{DC1}) and
- the step-up converter (312) or the active rectifier (310, 413) is controlled depending on at least one criterion from the list including
- a harmonic content of the current (I_{E}) which is fed in,
- an operating point of the feed-in,
- a number of inverters used for inverting (314),
- an or the operating point of the generator (300),
- a reactive power set point value or an actual value of the reactive power,
- a detected line voltage (U_{N}) of the electrical supply grid (302),
- a grid condition of the electrical supply grid (302),
- a positive sequence component of the current (I_{E}) which is fed in,
- a negative sequence component of the current (I_{E}) which is fed in and
- the impedance of a or the power choke (316),
- an excitation power of the generator (300) if the generator (300) is a separately excited synchronous generator,
- a specification of a grid operator, and
- grid sensitivity of the electrical supply grid (302).

10. The method as claimed in one of the preceding claims, **characterized in that** when the first DC voltage (U_{DC1}) is present
- it is ascertained by directly measuring the first DC voltage (U_{DC1}) or by detecting the power generated by the generator (300) and/or
- the first DC voltage (U_{DC1}) is higher than 100 V and lower than 800 V, in particular lower than 400 V.

11. The method as claimed in one of the preceding claims, **characterized in that**
- the step-up ratio is set in such a way that, or
- rectifying the first AC voltage (U_{AC1}) into the second DC voltage (U_{DC2}) is controlled in such a way that
- the second DC voltage (U_{DC2}) is higher than 400 V, in particular higher than 600 V, and lower than 1200 V.

12. A wind power plant (100) for feeding electrical power into an electrical supply grid (302), comprising
- a generator (300) for generating electrical power and for emitting a first AC voltage (U_{AC1}),
- at least one first rectifying means for rectifying the first AC voltage (U_{AC1}) into a first DC voltage (U_{DC1}),and
- at least one step-up means for stepping up the first DC voltage (U_{DC1}) to a second DC voltage (U_{DC2}), in particular in such a way that the second DC voltage (U_{DC2}) has a step-up ratio relative to the first DC voltage (U_{DC1}),or
- an active rectifier (310; 413) for rectifying the first AC voltage (U_{AC1}) into the second DC voltage (U_{DC2}) without generating the first DC voltage (U_{DC1}),
- at least one inverter (314) for inverting the second DC voltage (U_{DC2}) into a second AC voltage (U_{AC2}) for feeding the electrical power into the electrical supply grid (302) depending on a feed set point value (P_{Soll}, Q_{Soll}),
**characterized in that**,
- the wind power plant (100) further comprises a setting means (318) which is prepared for setting the second DC voltage (U_{DC2}) depending on the feed set point value or actual value (P_{Soll}, Q_{Soll}) of the feed, and wherein the second DC voltage(U_{DC2}) is increased depending on an increase in the feed set point value or actual value (P_{Soll}, Q_{Soll}) of the feed on the one hand or on the other hand either by the active rectifier or by the inverter.

13. The wind power plant (100) as claimed in claim 12, **characterized in that** it is prepared for carrying out a method as claimed in one of claims 1 to 11.

14. The wind power plant (100) as claimed in claim 12 or 13, **characterized in that** a power choke (316) is connected downstream of each of the inverters (314).

15. A wind park (112) with a plurality of wind power plants (100) as claimed in one of claims 12 to 14.

## Revendications

1. Procédé d'injection d'une puissance électrique dans un réseau d'alimentation électrique (302), comprenant les étapes :
- de redressage d'une première tension alternative (U_{AC1}) d'une puissance électrique produite par un générateur (300) en une première tension continue (U_{DC1}), et
- d'amplification de la première tension continue (U_{DC1}) en une deuxième tension continue (U_{DC2}) par un moyen d'amplification (312),
en particulier de telle sorte que la deuxième tension continue (U_{DC2}) présente un rapport d'amplification par rapport à la première tension continue (U_{DC1}), ou
- de redressage de la première tension alternative (U_{AC1}) en la deuxième tension continue (U_{DC2}) par un redresseur (413) actif sans produire la première tension continue (U_{DC1}),
- d'ondulation de la deuxième tension continue (U_{DC2}) en une deuxième tension alternative (U_{AC2}) par un onduleur (314) pour injecter la puissance électrique dans le réseau d'alimentation électrique (302) en fonction d'une valeur théorique d'injection (P_{théorique}, Q_{théorique}),
**caractérisé en ce que**
la deuxième tension continue (U_{DC2}) est réglée en fonction de la valeur théorique et/ou de la valeur réelle d'injection (P_{théorique}, Q_{théorique}), et dans lequel la deuxième tension continue (U_{DC2}) est augmentée d'une part par le moyen d'amplification (312) ou d'autre part soit par le redresseur actif (413) soit par l'onduleur (314) en fonction d'une augmentation de la valeur théorique ou de la valeur réelle d'injection (P_{théorique}, Q_{théorique}).

2. Procédé selon la revendication 1, **caractérisé en ce que** pour régler la deuxième tension continue (U_{DC2})
- le rapport d'amplification de la deuxième par rapport à la première tension continue (U_{DC1}) est réglé en fonction de la valeur théorique d'injection (P_{théorique}, Q_{théorique}), dans lequel en particulier le rapport d'amplification est supérieur à 1 et inférieur à 6, de préférence est inférieur à 4, en particulier est inférieur à 2 et/ou le rapport d'amplification est réglé en supplément en fonction de la première tension continue (U_{DC1}),
- ou le redressage de la première tension alternative (U_{AC1}) en la deuxième tension continue (U_{DC2}) est commandé en fonction de la valeur théorique d'injection (P_{théorique}, Q_{théorique}).

3. Procédé selon la revendication 1 ou 2, **caractérisé en ce que**
- la valeur théorique d'injection (P_{théorique}, Q_{théorique}) est une valeur théorique de puissance réactive.

4. Procédé selon l'une quelconque des revendications précédentes, **caractérisé en ce que**
- le réglage de la deuxième tension continue (U_{DC2}) est effectué en fonction de la fraction de courant réactif de la puissance électrique injectée.

5. Procédé selon l'une quelconque des revendications précédentes, **caractérisé en ce qu'**un procédé à bande de tolérance est utilisé pour onduler la deuxième tension continue (U_{DC2}) en la deuxième tension alternative (U_{AC2}).

6. Procédé selon l'une quelconque des revendications précédentes, **caractérisé en ce que** la deuxième tension continue (U_{DC2}) est réglée en fonction d'une puissance absorbée depuis le réseau d'alimentation électrique (302), en particulier une puissance réactive.

7. Procédé selon l'une quelconque des revendications précédentes, **caractérisé en ce que**
- le générateur (300) présente un point de travail en fonction d'un vent prédominant et/ou en fonction d'une spécification, et
- le réglage de la deuxième tension continue (U_{DC2}) est effectué en supplément en fonction du point de travail.

8. Procédé selon l'une quelconque des revendications précédentes, **caractérisé en ce que** la deuxième tension continue (U_{DC2}) est réglée en fonction d'une bobine de réactance à courant de réseau (316), par l'intermédiaire de laquelle la puissance électrique est injectée dans le réseau d'alimentation électrique (302).

9. Procédé selon l'une quelconque des revendications précédentes, **caractérisé en ce que**
- un convertisseur-élévateur (312) est utilisé pour amplifier la première tension continue (U_{DC1}) en la deuxième tension continue (U_{DC2}) ou un onduleur actif (310 ; 413) est utilisé pour redresser la première tension alternative (U_{AC1}) en la deuxième tension continue (U_{DC2}) sans produire la première tension continue (U_{DC1}), et
- le convertisseur-élévateur (312) ou l'onduleur actif (310 ; 413) est commandé en fonction d'au moins un critère issu de la liste présentant
- - une proportion d'ondes harmoniques du courant injecté (I_{E}),
- - un point de travail de l'injection,
- - un nombre d'onduleurs (314) utilisés pour l'ondulation,
- - un ou le point de travail du générateur (300),
- - une valeur théorique ou une valeur réelle de puissance réactive,
- - une tension de réseau (U_{N}) détectée du réseau d'alimentation électrique (302),
- - un état de réseau du réseau d'alimentation électrique (302),
- - une composante de système direct du courant injecté (I_{E}),
- - une composante de système inverse du courant injecté (I_{E}), et
- - l'impédance d'une ou de la bobine de réactance à courant de réseau (316),
- - une puissance d'excitation du générateur (300) quand le générateur (300) est un générateur synchrone excité par une puissance extérieure,
- - une spécification d'un opérateur de réseau, et
- - une sensibilité de réseau du réseau d'alimentation électrique (302).

10. Procédé selon l'une quelconque des revendications précédentes, **caractérisé en ce qu'**en présence de la première tension continue (U_{DC1}),
- celle-ci est déterminée par une mesure directe de la première tension continue (U_{DC1}) ou par détection de la puissance produite par le générateur (300), et/ou
- la première tension continue (U_{DC1}) est supérieure à 100 V et inférieure à 800 V, en particulier est inférieure à 400 V.

11. Procédé selon l'une quelconque des revendications précédentes, **caractérisé en ce que**
- le rapport d'amplification est réglé de telle sorte ou
- l'ondulation de la première tension alternative (U_{AC1}) en la deuxième tension continue (U_{DC2}) est commandée de telle sorte que
- la deuxième tension continue (U_{DC2}) est supérieure à 400 V, en particulier est supérieure à 600 V et inférieure à 1200 V.

12. Eolienne (100) pour l'injection d'une puissance électrique dans un réseau d'alimentation électrique (302), comprenant
- un générateur (300) pour produire une puissance électrique et pour distribuer une première tension alternative (U_{AC1}),
- au moins un premier onduleur pour onduler la première tension alternative (U_{AC1}) en une première tension continue (U_{DC1}), et
- au moins un moyen d'amplification pour amplifier la première tension continue (U_{DC1}) en une deuxième tension continue (U_{DC2}), en particulier de telle sorte que la deuxième tension continue (U_{DC2}) présente un rapport d'amplification par rapport à la première tension continue (U_{DC1}), ou
- un onduleur actif (310 ; 413) pour onduler la première tension alternative (U_{AC1}) en la deuxième tension continue (U_{DC2}) sans produire la première tension continue (U_{DC1}),
- au moins un onduleur (314) pour onduler la deuxième tension continue (U_{DC2}) en une deuxième tension alternative (U_{AC2}) pour injecter la puissance électrique dans le réseau d'alimentation électrique (302) en fonction d'une valeur théorique d'injection (P_{théorique}, Q_{théorique}),
**caractérisée en ce que**
l'éolienne comprend par ailleurs encore un moyen de réglage (318), préparé pour régler la deuxième tension continue (U_{DC2}) en fonction de la valeur théorique d'injection et/ou de la valeur réelle d'injection (P_{théorique}, Q_{théorique}), et dans laquelle la deuxième tension continue (U_{DC2}) est augmentée d'une part par le moyen d'amplification ou d'autre part soit par le redresseur actif soit par l'onduleur en fonction d'une augmentation de la valeur théorique ou de la valeur réelle d'injection (P_{théorique}, Q_{théorique}).

13. Eolienne (100) selon la revendication 12, **caractérisée en ce qu'**elle est préparée pour exécuter un procédé selon l'une quelconque des revendications 1 à 11.

14. Eolienne (100) selon la revendication 12 ou 13, **caractérisée en ce qu'**une bobine de réactance à courant de réseau (316) est branchée en aval de chacun des onduleurs (314).

15. Parc éolien (112) avec plusieurs éoliennes (100) selon l'une quelconque des revendications 12 à 14.
